# EUROPÄISCHE PATENTANMELDUNG

(11) **EP 2 239 240 A1**
(43) Veröffentlichungstag der Anmeldung: **13.10.2010**
(21) Anmeldenummer: 10168355.5
(22) Anmeldetag: 21.06.2005
(51) Int. Cl.: C04B 24/26, B02C 23/06

(54) **Zementmahlhilfsmittel**

(30) Priorität: 21.06.2004 EP 04102826
(62) Teilanmeldung aus: 05754131.0
(71) Anmelder: Sika Technology AG, 6340 Baar (CH)
(72) Erfinder: Mäder, Urs, 8500, Frauenfeld (CH); Honert, Dieter, 69234, Dielheim (CH); Marazzani, Beat, 8102, Oberengstringen (CH)
(74) Vertreter: Isler, Jörg

(57) **Zusammenfassung**

Die vorliegende Erfindung betrifft wässrige Zusammensetzung von Polymeren **A** als Zementmahlhilfsmittel. Diese Zusammensetzung weist wirkungsvolle Reduktion der Mahlzeit von Klinker auf und führt zu Zementen mit exzellenten Eigenschaften auf. Weiterhin beinhaltet die Erfindung Zementmahlhilfsmittel umfassend eine Kombinationen des Polymeren **A** und bekannten Zementmahlhilfsmittel.

## Beschreibung

### Technisches Gebiet

Die Erfindung betrifft das Gebiet der Zementmahlhilfsmittel.

### Stand der Technik

Die Herstellung von Zement ist ein sehr komplexer Prozess. Zement ist bekanntermassen sehr empfindlich gegenüber Wasser, unabhängig davon, ob es in flüssigem oder gasförmigen Zustand vorliegt, denn Zement bindet hydraulisch ab, das heisst, er erhärtet unter dem Einfluss von Wasser innert kurzer Zeit zu einem sehr stabilen Festkörper. Ein zentraler Schritt in der Zementherstellung ist das Mahlen des Klinkers. Da Klinker sehr hart sind, ist das Zerkleinern sehr aufwändig. Für die Eigenschaften des Zementes ist es wichtig, dass er als feines Pulver vorliegt. Deshalb ist die Feinheit des Zementes ein wichtiges Qualitätsmerkmal. Um das Zerkleinern in Pulverform zu erleichtern werden sogenannte Zementmahlhilfsmittel eingesetzt. Dadurch werden die Mahlzeiten und Energiekosten stark reduziert. Solche Zementmahlhilfsmittel sind üblicherweise ausgewählt aus der Klasse umfassend Glykole wie Alkylenglykole, Amine oder Aminoalkohole

So beschreibt beispielsweise US 5,084,103 Trialkanolamine, wie Triisopropanolamin (TIPA) oder N,N-bis(2-hydroxyethyl)-N-(2-hydroxypropyl)amin und Tris(2-hydroxybutyl)amin als Mahlhilfsmittel für Klinker.

Weiterhin sind wasserlösliche Polycarboxylate als Mahlhilfsmittel für die Herstellung von wässrigen Suspensionen von Mineralien wie Kalk oder Pigmente insbesondere für den Einsatz in der Papierherstellung aus WO 97/10308 oder EP 0 100 947 A1 bekannt. US 2002/0091177 A1 beschreibt den Einsatz von Polymeren aus ethylenisch ungesättigten Monomeren als Mahlhilfsstoff zur Herstellung von wässrigen Suspensionen von gemahlenen Mineralfüllern. Weiterhin offenbart dieses Dokument, dass eine Zement, welcher mit eine solche wässrige Suspension vermischt wird zu verbesserter Frühfestigkeit führt. In keinen dieser Dokumente ist jedoch ein Zementmahlhilfsmittel offenbart.

Der Einsatz von sogenannten Beton-Verflüssiger ist seit langem bekannt. Beispielsweise ist aus EP 1 138 697 B1 oder EP 1 061 089 B1 bekannt, dass (Meth)acrylat-Polymere mit Ester- und gegebenenfalls Amid-Seitenketten als Beton-Verflüssiger geeignet sind. Hierbei wird dieser Beton-Verflüssiger dem Zement als Zusatzmittel zugegeben oder dem Zement vor dem Mahlen zugesetzt, und führt zu einer starken Verflüssigung, beziehungsweise Reduktion des Wasserbedarfs, des daraus hergestellten Betons oder Mörtels.

### Darstellung der Erfindung

Überraschenderweise wurde nun gefunden, dass wässrige Zusammensetzungen enthaltend mindestens ein Polymer **A** gemäss Formel (I) auch als Zementmahlhilfsmittel, insbesondere in Kombination mit Aminoalkoholen, eingesetzt werden können. Weiterhin wurde überraschenderweise gefunden, dass durch die Kombination der Polymere **A** mit den üblichen Zementmahlhilfsmittel die Nachteile der bekannten Mahlhilfsmittel aufgehoben, beziehungsweise stark reduziert, werden können ohne dass die vorteilhaften Wirkungen des Polymers **A** verloren gehen.

### Wege zur Ausführung der Erfindung

Die vorliegende Erfindung betrifft die Verwendung wässriger Zusammensetzungen als Zementmahlhilfsmittel. Die wässrige Zusammensetzung enthält mindestens ein Polymer **A** der Formel (I).

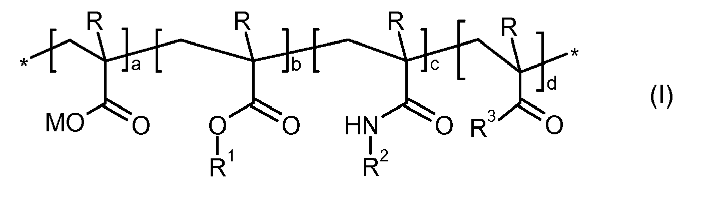

Hierbei stellen M unabhängig voneinander H⁺, Alkalimetallion, Erdalkalimetallion, zwei- oder dreiwertiges Metallion, Ammoniumion, oder organische Ammoniumgruppe dar. Der Term "unabhängig voneinander" bedeutet hier und im Folgenden jeweils, dass ein Substituent unterschiedliche zur Verfügung stehenden Bedeutungen in demselben Molekül aufweisen kann. So kann beispielsweise im Polymer **A** der Formel (I) gleichzeitig Carbonsäuregruppen und Natriumcarboxylatgruppen aufweisen, das heisst, dass für R₁ in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stellen die Substituenten R unabhängig voneinander Wasserstoff oder Methyl dar. Das heisst es handelt sich beim Polymeren **A** um ein substituiertes Poly(acrylat), Poly(methacrylat) oder um ein Poly((meth)-acrylat) handelt.

Des weiteren stellen die Substituenten R¹ und R² unabhängig voneinander C₁- bis C₂₀-Alkyl, Cycloalkyl, Alkylaryl oder -[AO]ₙ-R⁴ dar. Hierbei stellt A eine C₂- bis C₄-Alkylengruppe dar und R⁴ eine C₁- bis C₂₀ -Alkyl-, Cyclohexyl- oder Alkylarylgruppe dar, während n einen Wert von 2 bis 250, insbesondere von 8 bis 200, besonders bevorzugt von 11 bis 150, darstellt.

Des weiteren stellt der Substituenten R³ unabhängig voneinander -NH₂, -NR⁵R⁶, -OR⁷NR⁸R⁹ dar. Hierbei stehen R⁵ und R⁶ unabhängig voneinander für H oder für eine C₁- bis C₂₀- Alkyl-, Cycloalkyl- oder Alkylaryl- oder Arylgruppe oder eine Hydroxyalkylgruppe oder eine Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) oder R⁵ und R⁶ bilden zusammen einen Ring, von dem der Stickstoff ein Teil ist, um einen Morpholin- oder Imidazolinring aufzubauen. Weiterhin stellen hierbei die Substituenten R⁸ und R⁹ unabhängig voneinander eine C₁- bis C₂₀- Alkyl-, Cycloalkyl-, Alkylaryl-, Aryl- oder eine Hydroxyalkylgruppe und R⁷ eine C₂-C₄- Alkylengruppe dar.

Schliesslich stellen die Indizes a, b, c und d Molverhältnisse dieser Strukturelemente im Polymer **A** der Formel (I) dar. Diese Strukturelemente stehen in einem Verhältnis von

| | |
|---|---|
| | a/b/c/d = (0.1 - 0.9) / (0.1 - 0.9) / (0 - 0.8) / (0 - 0.3), |
| insbesondere | a/b/c/d = (0.1 - 0.9) / (0.1 - 0.9) / (0 - 0.5) / (0 - 0.1), |
| bevorzugt | a/b/c/d = (0.1 - 0.9) / (0.1 - 0.9) / (0 - 0.3) / (0 - 0.06), |

zueinander, während die Summe a + b + c + d = 1 ist. Die Summe c + d ist bevorzugt grösser als 0.

Die Herstellung des Polymeren **A** kann durch radikalische Polymerisation der jeweiligen Monomere 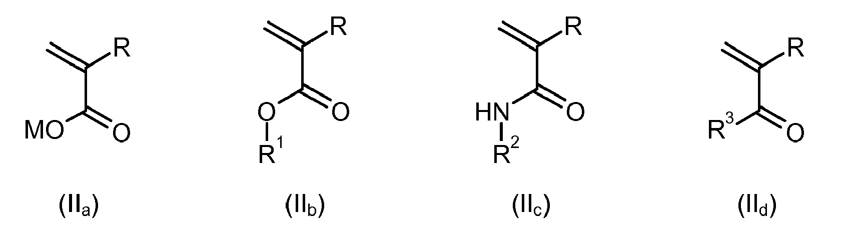 oder durch eine sogenannte polymer-analoge Umsetzung eine Polycarbonsäure der Formel (III) erfolgen

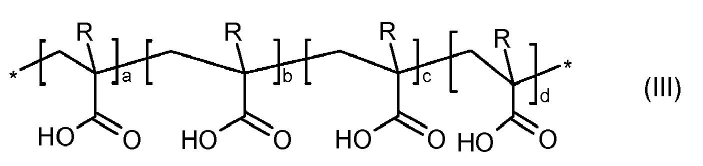

In der polymer-analoge Umsetzung wird die Polycarbonsäure mit den korrespondierenden Alkoholen, Aminen verestert oder amidiert. Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Polymer **A** in festem Aggregatszustand hergestellt werden.

Es hat sich erwiesen, dass eine besonders bevorzugte Ausführungsform des Polymeren diejenigen sind, in welchen c+d > 0, insbesondere d > 0, sind. Als Rest R³ hat sich insbesondere -NH-CH₂-CH₂-OH als besonderes vorteilhaft erwiesen. Derartige Polymere **A** weisen ein chemisch gebundenes Ethanolamin auf, welches einen äusserst effizienten Korrosionsinhibitor darstellt. Durch die chemische Anbindung des Korrosionsinhibitors ist der Geruch stark reduziert im Vergleich dazu, wo dieser lediglich beigemischt ist. Weiterhin konnte festgestellt werden, dass derartige Polymere **A** auch eine bedeutend stärkere Verflüssigereigenschaften aufweisen.

Die Herstellung der wässrige Zusammensetzung erfolgt durch Zusetzen von Wasser bei der Herstellung des Polymers **A** der Formel (I) oder durch nachträgliches Vermengen von Polymer **A** der Formel (I) mit Wasser.

Typischerweise beträgt der Anteil des Polymeren **A** der Formel (I) 10 bis 90 Gewichts-%, insbesondere 25 bis 50 Gew.-%, bezogen auf das Gewicht der wässrigen Zusammensetzung.

Je nach Art des Polymers **A** der Formel (I) entsteht eine Dispersion oder eine Lösung. Bevorzugt wird eine Lösung.

Die wässrige Zusammensetzung kann weitere Bestandteile enthalten. Beispiels hierfür sind Lösungsmittel oder Additive, wie sie in der Betontechnologie geläufig sind, insbesondere oberflächenaktive Stoffe, Stabilisatoren gegen Hitze und Licht, Farbstoffe, Entschäumer, Beschleuniger, Verzögerer, Korrosionsinhibitoren, Luftporenbildern.

In einer Ausführungsform der Erfindung umfasst die als Zementmahlhilfsmittel verwendete wässrige Zusammensetzung - im Weiteren als **ZA** bezeichnet - abgesehen von mindestens einem Polymer **A** der Formel (I) keine weiteren Mahlhilfsmittel.

In einer bevorzugten Ausführungsform der Erfindung umfasst die als Zementmahlhilfsmittel verwendete wässrige Zusammensetzung - im Weiteren als **ZAMH** bezeichnet - neben mindestens einem Polymer **A** der Formel (I), wie es oben beschreiben wurde, mindestens ein weiteres Mahlhilfsmittel. Dieses weitere Mahlhilfsmittel ist insbesondere ausgewählt aus der Gruppe umfassend Glykole, organische Amine und Ammoniumsalze von organischen Aminen mit Carbonsäuren.

Als Glykole sind insbesondere Alkylenglykole geeignet, vor allem der Formel OH-(CH₂-CH₂O)ₙ-CH₂CH₂-OH mit n = 0 - 20, insbesondere 0, 1, 2 oder 3.

Als organische Amine sind insbesondere Alkanolamine, vor allem Trialkanolamine geeignet, bevorzugt Triisopropanolamin (TIPA) oder Triethanolamin (TEA).

Die wässrige Zusammensetzung wird dem Klinker vor dem Mahlen zugegeben und anschliessend zum Zement gemahlen. Grundsätzlich kann die Zugabe der wässrigen Zusammensetzung auch während des Mahlprozess erfolgen. Bevorzugt ist jedoch die Zugabe vor dem Mahlen. Die Zugabe kann vor, während oder nach der Zugabe von Gips und gegebenenfalls anderen Zumahlstoffen, wie beispielsweise Kalk, Hochofenschlacke, Flugasche oder Puzzolane, erfolgen. Die wässrige Zusammensetzung kann auch für die Herstellung von Mischzementen verwendet werden. Hierzu können individuelle Zemente, die jeweils separat durch Mahlung mit der wässrigen Zusammensetzung hergestellt werden, gemischt werden oder es wird eine Mischung von mehreren Zementklinkern mit der wässrigen Zusammensetzung gemahlen um einen Mischzement zu erhalten.

Selbstverständlich kann - auch wenn dies nicht bevorzugt ist - anstelle einer wässrigen Zusammensetzungen **ZAMH** eine wässrige Zusammensetzungen **ZA** auch zusammen mit einem Mahlhilfsmittel kombiniert werden und zum Einsatz gelangen, das heisst dass diese wässrige Zusammensetzung vom weiteren Mahlhilfsmittel getrennt voneinander beim Mahlen eingesetzt werden.

Die wässrige Zusammensetzung wird bevorzugt dem Klinker so zudosiert, dass das Polymer **A** der Formel (I) zu 0.001 - 1.5 Gew.-%, insbesondere zwischen 0.005 und 0.2 Gew.-%, bevorzugt zwischen 0.005 und 0.1 Gew.-%, bezogen auf den zu mahlenden Klinker beträgt.

Es hat sich deshalb unter anderem gezeigt, dass bereits bedeutend kleinere Konzentrationen des Polymers **A** in Bezug auf den Zement wirkungsvoll als Zementmahlhilfsmittel eingesetzt werden können, als sie bekanntermassen, d.h. typischerweise 0.2 bis 1.5% Polymer A, als Verflüssiger-Zusatzmittel dem Zement zugesetzt werden.

Der Mahlprozess erfolgt üblicherweise in einer Zementmühle. Es können aber grundsätzlich auch andere Mühlen, wie sie in der Zementindustrie bekannt sind, eingesetzt werden. Je nach Mahldauer verfügt der Zement über unterschiedliche Feinheit. Die Feinheit von Zement wird typischerweise nach Blaine in cm²/g angegeben. Andererseits ist für die Feinheit auch die Partikelgrössenverteilung von Praxisrelevanz. Solche Partikelgrössenanalysen werden üblicherweise durch Lasergranulometrie oder Luftstrahlsiebe ermittelt.

Durch den Einsatz der erfindungsgemässen wässrigen Zusammensetzung kann die Mahlzeit zur Erreichung der gewünschten Feinheit reduziert werden. Durch die dadurch reduzierten Energiekosten ist der Einsatz dieser Zementmahlhilfsmittel wirtschaftlich sehr interessant.

Es konnte festgestellt werden, dass die wässrigen Zusammensetzungen sich gut als Zementmahlhilfsmittel eignen. Es lassen sich mit ihnen aus Klinker verschiedenste Zemente herstellen, insbesondere solche nach DIN EN 197-1 klassierte Zemente CEM-I (Portlandzement), CEM II und CEM III (Hochofenzement). Bevorzugt ist CEM-I.

Durch den Zusatz der wässrigen Zusammensetzungen konnte beispielsweise die Mahlzeit bis zum Erreichen einer bestimmten Blaine-Feinheit reduziert werden. Durch den Einsatz der erfindungsgemässen wässrigen Zusammensetzung kann somit die Mahlzeit zur Erreichung der gewünschten Feinheit reduziert werden. Durch die dadurch reduzierten Energiekosten ist der Einsatz dieser Zementmahlhilfsmittel wirtschaftlich sehr interessant.

Es konnte weiterhin festgestellt werden, dass bei der Verwendung von wässrigen Zusammensetzungen **ZA** kein oder nur geringer Lufteintrag in den mit dem Zement formulierten hydraulisch abbindenden Zusammensetzungen, insbesondere Mörteln, erfolgt, während dieser bei der Verwendung von Alkanolaminen als Mahlhilfsmittel äusserst stark vorhanden ist.

Weiterhin zeigte sich, dass die bei Alkanolaminen festgestellte Erhöhung des Wasseranspruches bei wässrigen Zusammensetzung **ZA** nicht auftritt, beziehungsweise dieser im Vergleich zum Zement gänzlich ohne Mahlhilfsmittel sogar reduziert wird.

Überraschenderweise wurde weiterhin gefunden, dass durch eine Kombination von Polymer **A** der Formel (I) mit einem weiteren Mahlhilfsmittel in einer wässrigen Zusammensetzung **ZAMH** ein Zementmahlhilfsmittel erhalten wird, welches die Vorteile des Polymeren **A** und der Mahlhilfsmittel kombiniert, beziehungsweise deren Nachteile verringert bis sogar aufhebt.

So hat sich beispielsweise gezeigt, dass eine wässrige Zusammensetzung **ZAMH** enthaltend Polymer **A** und Alkanolamin ein exzellentes Mahlhilfsmittel ist, dass aber der so hergestellte Zement - verglichen mit einem Zement mit lediglich Alkanolamin als Mahlhilfsmittel - auch über ein stark reduzierten Wasseranspruch verfügt und dass exzellente Frühfestigkeiten erzielt werden können.

Weiterhin hat sich beispielsweise gezeigt, dass eine wässrige Zusammensetzung **ZAMH** enthaltend Polymer **A** und ein Alkylenglykol ein exzellentes Mahlhilfsmittel darstellt und der somit hergestellte Zement über exzellente Aushärtungseigenschaften verfügt.

Als besonders vorteilhaft haben sich wässrige Zusammensetzung **ZAMH** enthaltend Polymer **A** und ein Alkanolamin sowie ein Alkylenglykol. Derartige Zusammensetzungen haben sich als äusserst effiziente Mahlhilfsmittel erwiesen. Die so hergestellten Zemente weisen ein grosses Ausbreitmass und insbesondere eine exzellente Frühfestigkeit auf.

Der derart gemahlene Zement findet wie jeder anderes gemahlene Zement eine breite Anwendung in Beton, Mörteln, Vergussmassen, Injektionen oder Putzen.

Werden grössere Mengen an Polymer **A** dem Zement vor dem Mahlen des Klinkers zugeben, sind nach dessen Abmischung mit Wasser die von Polymeren **A** bekannten Verflüssigereigenschaften ersichtlich. Somit ist es in einer weiteren bevorzugten Ausführungsform der Erfindung möglich, dem Klinker bereits vor dem Mahlen soviel Polymer **A**, gegebenenfalls mit einem weiteren Mahlhilfsmittel, in Form einer wässrigen Zusammensetzung zuzugeben, wie sie üblicherweise dem Zement als Zusatzmittel zugegeben werden, um eine erwünschte Verflüssigung im Kontakt mit Wasser benötigt werden. Typischerweise beträgt diese Menge 0.2 bis 1.5 Gew.-% Polymer **A** in Bezug auf den Zement. Somit ist gemäss dieser Ausführungsform kein nachträgliches Zumischen eines Verflüssigers mehr nötig und spart deshalb einen Arbeitsgang beim Anwender des Zementes. Ein derartiger Zement stellt daher ein "ready-to-use"- Produkt dar, welches in grossen Mengen hergestellt werden kann.

### Beispiele

### Verwendete Polymere A

**Tabelle 1 Verwendete Abkürzungen.**

| Abkürzung | Bedeutung | Mw^{*} |
|---|---|---|
| PEG500 | Polyethylenglykol ohne terminale OH-Gruppen | 500 g/mol |
| PEG1000 | Polyethylenglykol ohne terminale OH-Gruppen | 1000 g/mol |
| PEG1100 | Polyethylenglykol ohne terminale OH-Gruppen | 1100 g/mol |
| PEG2000 | Polyethylenglykol ohne terminale OH-Gruppen | 2000 g/mol |
| PEG3000 | Polyethylenglykol ohne terminale OH-Gruppen | 3000 g/mol |
| PPG600 | Polypropylenglykol ohne terminale OH-Gruppen | 600 g/mol |
| PPG800 | Polypropylenglykol ohne terminale OH-Gruppen | 800 g/mol |
| EO/PO(50/50)2000 | Block-Copolymer aus Ethylenoxid und Propylenoxid im Verhältnis 50:50 ohne terminale OH-Gruppen | 2000 g/mol |

| | | |
|---|---|---|
| ^{*}Mw = mittleres Molekulargewicht | | |

Es wurden die in Tabelle 2 angebebenen Polymere **A** mittels polymer analoger Umsetzung aus den jeweiligen Poly(meth)acrylsäuren mit den korrespondierenden Alkoholen und/oder Aminen nach bekannter Art und Weise hergestellt. Die Polymere ***A-1*** bis ***A-12*** liegen durch NaOH teil neutralisiert vor. (M = H⁺, Na⁺).

Die Polymeren **A** werden als wässrige Lösungen als Zementmahlhilfsmittel eingesetzt. Der Gehalt an Polymer ist 30 Gew.-% (***A-4***), 35 Gew.-% (***A-2***) oder 40 Gew.-% (***A-1, A-3, A-5*** bis ***A-12***). Diese wässrigen Lösungen werden als ***A-1L, A-2L, A-3L, A-4L, A-5L, A-6L, A-7L, A-8L, A-9L, A-10L, A-11L*** und ***A-12L*** bezeichnet. Die in den folgenden Tabellen angegebenen Konzentrationen für **A** beziehen sich jeweils auf den Gehalt an Polymer **A**.

**Tabelle 2 Polymere A entsprechen der Formel (I) mit M= H⁺, Na⁺.**

| | R = | | R¹ = | | R² = | R³ = | a/b/c/d = | Mw |
|---|---|---|---|---|---|---|---|---|
| ***A-1*** | H | | -PEG10 00-OCH₃: | 65: | -EO/PO(50/50)2000-OCH₃ | | 0.640/0.358/0.002/0.000 | 72'000 |
| | | | -PEG3000-OCH₃ | 35^{†} | | | | |
| ***A-2*** | CH₃ | | -PEG1000-OCH₃ | | | | 0.750/0.250/0.000/0.000 | 24'000 |
| ***A-3*** | H | | -PEG1000-OCH₃ | | -EO/PO(50/50)2000-OCH₃ | | 0.610/0.385/0.005/0.000 | 35'000 |
| ***A-4*** | CH₃ | | -PEG1000-OCH₃ | | -EO/PO(50/50)2000-OCH₃ | | 0.650/0.348/0.002/0.000 | 32'000 |
| ***A-5*** | H | | -PEG1100-OCH₃ | | | | 0.750/0.250/0.000/0.000 | 25'000 |
| ***A-6*** | H | | -PEG1000-OCH₃ | | -PEG500-OCH₃ | | 0.670/0.320/0.010/0.000 | 16'000 |
| ***A-7*** | H | | -PEG1000-OCH₃: | 65: | -EO/PO(50/50)2000-OCH₃ | -O-CH₂-CH₂-N(CH₃)₂ | 0.640/0.348/0.002/0.010 | 53'000 |
| | | | -PEG3000-OCH₃ | 35^{†} | | | | |
| ***A-8*** | H | | -PEG1100-OCH₃ | | -PPG600-O-n-Butyl | -O-CH₂-CH₂-N(n-Butyl)₂ | 0.600/0.340/0.050/0.010 | 52'000 |
| ***A-9*** | CH₃ | | -PEG500-OCH₃: | 60: | -PPG800-O-n-Butyl | -O-CH₂-CH₂-N(CH₃)₂ | 0.740/0.230/0.020/0.010 | 35'000 |
| | | | -PEG3000-OCH₃ | 40^{†} | | | | |
| ***A-10*** | CH₃ | | -PEG1000-OCH₃: | 80: | | -N(CH₂-CH₂-OH)₂ | 0.650/0.348/0.00/0.002 | 48'000 |
| | | | -PEG3000-OCH₃ | 20^{†} | | | | |
| ***A-11*** | CH₃ | | -PEG1000-OCH₃ | | -EO/PO(50/50)2000-OCH₃ | -NH-(CH₂-CH₂-OH) | 0.59/0.359/0.001/0.050 | 32'000 |
| ***A-12*** | | Struktur-e.^{*} | -PEG2000-OCH₃ | | -PEG500-OCH₃ | | 0.850/0.148/0.020/0.000 | 25'000 |
| | H | a | | | | | | |
| | CH₃ | b, c | | | | | | |

| | | | | | | | | |
|---|---|---|---|---|---|---|---|---|
| ^{*}Struktur-e.=Struktur-Element ^{†}Molverhältnis | | | | | | | | |

### Weitere verwendete Zementmahlhilfsmittel

**Tabelle 3 Weitere Zementmahlhilfsmittel**

| | |
|---|---|
| ***TEA*** | Triethanolamin |
| ***TIPA*** | Triisopropanolamin |
| ***DEG*** | Diethylenglykol |

### Verwendete Klinker

**Tabelle 4 Verwendete Klinker**

| | |
|---|---|
| ***K-1*** | Normalwertklinker für CEM I |
| | HeidelbergCement, Werk Leimen, Deutschland |
| ***K-2*** | Klinker für CEM II/B-M(S-LL) |
| | HeidelbergCement, Werk Lengfurt , Deutschland |
| ***K-3*** | Klinker für CEM I |
| | Buzzi Unicem S.p.A., Werk Robilante, Italien |

### Mahlen des Klinkers ohne Sulfatträger

Der Klinker wurde vorgängig auf eine Korngrösse von ca. 4 mm gebrochen. Dem Klinker (400 g) wurden die in Tabelle 5 angegebenen Konzentration unterschiedlicher Polymere **A** bezogen auf den Klinker zugegebenen und ohne Zusatz von Gips in einer Laborkugelmühle der Firma Fritsch ohne externe Heizung bei einer Rotationsgeschwindigkeit von 400 Umdrehungen pro Minute gemahlen.

### Mahlen des Klinkers mit Sulfatträger

20 - 25 kg einer Mischung des jeweiligen Klinker und einem für den jeweilig optimierten Zement Sulfatträger gemischt und mit dem jeweiligen Mahlhilfsmittel, beziehungsweise ohne Mahlhilfsmittel, in der in den Tabellen 6 bis 10 angegebenen Dosierung vermengt und in einer heizbaren Kugelmühle der Firma Siebtechnik bei einer Temperatur von 100 bis 120°C gemahlen. Neben der Mahldauer und dem Siebrückstand wurden mit dem so gemahlenen Zement weitere typische Zementeigenschaften bestimmt.

### Prüfmethoden

- Mahldauer₄₅₀₀ : Es wurde die Zeit bestimmt, bis die Mischung nach einem Mahlen in der Kugelmühle eine Blaine-Feinheit von 4500 cm²/g erhalten wurde.
- Feinheit: Die Feinheit wurde nach Blaine mittels Blaine Automat der Firma Wasag Chemie bestimmt.
- Siebrückstand: Vom Zement, welcher auf eine Feinheit nach Blaine von 4500 cm²/g gemahlen wurde, wurde der Siebrückstand vom Anteil der Partikel mit einer Partikelgrösse von grösser als 32 Mikrometer mittels eines Luftstrahlsiebes der Firma Alpine Hosokawa ermittelt.
- Siebrückstand₄₀₀₀: Vom Zement, welcher auf eine Feinheit nach Blaine von 4000 cm²/g gemahlen wurde, wurde der Siebrückstand vom Anteil der Partikel mit einer Partikelgrösse von grösser als 32 Mikrometer mittels eines Luftstrahlsiebes der Firma Alpine Hosokawa ermittelt.
- Wasserbedarf: Der Wasserbedarf zur sogenannten "Normensteife" wurde nach EN 196 an Zementleim bestimmt.
- Ausbreitmass: Das Ausbreitmass wurde nach EN196 an einem Normenmörtel bestimmt (Wasser/Zement =0.5) bestimmt.
- Luftporengehalt: Der Luftgehalt wurde entsprechend EN 196 bestimmt.
- Druckfestigkeit: Die Druckfestigkeit der erhärteten Prismen wurde gemäss EN 196 bestimmt.

Die im Folgenden gezeigten Resultate der erfindungsgemässen Beispiele und Vergleichbeispiele stammen jeweils alle aus einer unmittelbar aufeinander durchgeführten Messserie, die alle in derselben Tabelle zusammengefasst sind.

### Vergleich unterschiedliche Polymere A als Zementmahlhilfsmittel

Klinker: ***K-3*** ohne Sulfatträger

**Tabelle 5 Gemahlene Klinker ohne Sulfatträger.**

| Bezeichnung | ***Ref.1-1*** | ***1-1*** | ***2-1*** | ***3-1*** | ***4-1*** |
|---|---|---|---|---|---|
| Mahlhilfsmittel | - | ***A-1*** | ***A-2*** | ***A-3*** | ***A-4*** |
| Konzentration [Gew.-%]^{*} | | 0.02 | 0.0175 | 0.02 | 0.015 |
| Feinheit nach Blaine [cm²/g] | | | | | |
| Mahldauer 10 min. | 1760 | 2130 | 2180 | 2350 | 2180 |
| Δ_{ref} | | 21 % | 24% | 34% | 24% |
| Mahldauer 15 min. | 2560 | 3010 | 3110 | 3230 | 3110 |
| Δ_{ref} | | 18% | 21% | 26% | 21% |
| Mahldauer 20 min. | 3200 | 3780 | 3790 | 3960 | 3760 |
| Δ_{ref} | | 18% | 18% | 24% | 18% |

| | | | | | |
|---|---|---|---|---|---|
| ^{*}bezogen auf Klinker. | | | | | |

### Vergleich unterschiedliche Polymere A im Vergleich zu Alkanolaminen

**Tabelle 6 Polymere A als Mahlhilfsmittel.**

| Bezeichnung | ***Ref.1-2*** | ***Ref.2-2*** | ***Ref.3-2*** | ***2-2*** | ***3-2*** |
|---|---|---|---|---|---|
| Mahlhilfsmittel | - | ***TEA*** | ***TIPA*** | ***A-2*** | ***A-4*** |
| Konzentration [Gew.-%]^{*} | | 0.024 | 0.0255 | 0.0105 | 0.009 |
| Feinheit nach Blaine [cm²/g] | | | | | |
| Mahldauer 30 min. | 2180 | 2270 | 2280 | 2180 | 2110 |
| Δ_{ref} | | 4% | 5% | 0% | -3% |
| Mahldauer 60 min. | 3380 | 3530 | 3640 | 3530 | 3450 |
| Δ_{ref} | | 4% | 8% | 4% | 2% |
| Mahldauer 90 min. | 4170 | 4340 | 4380 | 4310 | 4230 |
| Δ_{ref} | | 4% | 5% | 3% | 1% |
| Mahldauer 300 min. | 4450 | 4550 | 4450 | 4510 | 4590 |
| Δ_{ref} | | 2% | 0% | 1% | 3% |
| Wasserbedarf [%] | 26.1 | 28.4 | 28.7 | 26.8 | 27.6 |
| Δ_{ref} | | 9% | 10% | 3% | 6% |

| | | | | | |
|---|---|---|---|---|---|
| ^{*}bezogen auf Klinker. | | | | | |

### Vergleich Mahlhilfsmittel

Klinker: ***K-1*** mit Sulfatträger

**Tabelle 7 Polymere A als Mahlhilfsmittel.**

| Bezeichnung | ***Ref.1-3*** | ***Ref.2-3*** | ***Ref.3-3*** | ***1-3*** | ***2-3*** | ***3-3*** |
|---|---|---|---|---|---|---|
| Mahlhilfsmittel | - | ***TEA*** | ***TIPA*** | ***A-1*** | ***A-2*** | ***A-3*** |
| Konzentration[Gew.-%]^{*} | | 0.08 | 0.08 | 0.08 | 0.07 | 0.08 |
| Wasserbedarf [%] | 26.7 | 29.7 | 29.8 | 26.4 | 24.8 | 25.6 |
| Δ_{ref} | | +11% | +12% | -1% | -7% | -4% |
| Ausbreitmass [cm] | 16.4 | 16.4 | 16 | 18.4 | 19.8 | 18.5 |
| Δ_{ref} | | -0% | -2% | +12% | +21% | +13% |
| Luftporengehalt [%] | 3.0 | 3.4 | 3.6 | 3.0 | 3.1 | 3.2 |
| Δ_{ref} | | +13% | +20% | 0 % | +3% | +7% |
| Mahldauer₄₅₀₀ [min] | 100 | 85 | 85 | 87 | 92 | 90 |
| Δ_{ref} | | -15% | -15% | -13% | -8% | -10% |

| | | | | | | |
|---|---|---|---|---|---|---|
| ^{*}bezogen auf Klinker. | | | | | | |

### Polymere A / Alkanolamin-Mischungen als Mahlhilfsmittel (ZAMH)

**Tabelle 8 Polymer A/Alkanolamine-Mischungen als Mahlhilfsmittel.**

| Mahlhilfsmittel | | ***A-1*** / ***TEA*** | | | | ***A-1*** / ***TIPA*** | | | |
|---|---|---|---|---|---|---|---|---|---|
| Bezeichnung | ***Ref.1-4*** | ***5-4a*** | ***5-4b*** | ***5-4c*** | ***5-4d*** | ***6-4a*** | ***6-4b*** | ***6-4c*** | ***6-4d*** |
| ***A-1*** [Gew.-%] ^{*} | - | 0.08 | 0.0536 | 0.0264 | | 0.008 | 0.0536 | 0.0264 | |
| ***TEA*** [ges.-%] ^{*} | - | | 0.0264 | 0.0536 | 0.08 | | | | |
| ***TIPA*** [Gew.-%]^{*} | - | | | | | | 0.0264 | 0.0536 | 0.08 |
| ***A-1***/Trialkanolamin | | 3/0 | 2/1 | 1/2 | 0/3 | 3/0 | 2/1 | 1/2 | 0/3 |
| Wasserbedarf [%] | 26.7 | 26.4 | 28.0 | 28.4 | 29.7 | 26.4 | 28.0 | 28.2 | 29.8 |
| Δ_{ref} | | -1% | 5% | 6% | 11% | -1% | 5% | 6% | 12% |
| Ausbreitmass [cm] | 16.4 | 18.4 | 16.8 | 16.9 | 16.4 | 18.4 | 17.2 | 17.1 | 16 |
| Δ_{ref} | | 12% | 2% | 3% | 0% | 12% | 5% | 4% | -2% |
| Luftporengehalt [%] | 3 | 3 | 3.3 | 3.3 | 3.4 | 3 | 3.6 | 3.5 | 3.6 |
| Δ_{ref} | | 0% | 10% | 10% | 13% | 0% | 20% | 17% | 20% |
| Mahldauer₄₅₀₀ [min] | 100 | 87 | 84 | 85 | 85 | 87 | 86 | 87 | 85 |
| Δ_{ref} | | -13% | -16% | -15% | -15% | -13% | -14% | -13% | -15% |
| Siebrückstand >32 µm [%] | 20.83 | 20.28 | 15.14 | 10.87 | 10.74 | 20.28 | 13.53 | 12.16 | 9.3 |
| Δ_{ref} | | -3% | -27% | -48% | -48% | -3% | -35% | -42% | -55% |
| Druckfestigkeit [N/mm²] | | | | | | | | | |
| nach 24 h | 16.1 | 14 | 17 | 19.7 | 18.7 | 14 | 17.8 | 18.9 | 18.4 |
| Δ_{ref} | | -13% | 6% | 22% | 16% | -13% | 11% | 17% | 14% |
| nach 2d | 27 | 23.1 | 26.1 | 30.3 | 30.1 | 23.1 | 27.7 | | 32.2 |
| Δ_{ref} | | -14% | -3% | 12% | 11% | -14% | 3% | | 19% |
| nach 7d | 38.2 | 32.3 | 36.9 | 39.6 | 39 | 32.3 | 39.7 | 38.9 | 39 |
| Δ_{ref} | | -15% | -3% | 4% | 2% | -15% | 4% | 2% | 2% |

| | | | | | | | | | |
|---|---|---|---|---|---|---|---|---|---|
| ^{*}bezogen auf Klinker. | | | | | | | | | |

### Polymere A / Alkanolamin-Mischungen als Mahlhilfsmittel (ZAMH)

Klinker: ***K-2*** mit Sulfatträger

**Tabelle 9 Polymer A/Alkanolamine-Mischungen als Mahlhilfsmittel.**

| Bezeichnung | ***Ref.1-5*** | ***Ref.4-5*** | ***1-5*** | ***7-5*** | ***8-5*** |
|---|---|---|---|---|---|
| Mahlhilfsmittel | - | ***DEG*** / ***TEA*** | ***A-1*** | ***A-1*** / ***TEA*** | ***A-1*** / ***TIPA*** |
| ***DEG*** [Gew.-%]^{*} | | 0.07 | | | |
| ***TEA*** [Gew.-%]^{*} | | 0.002 | | 0.0085 | |
| ***TIPA*** [Gew.-%]^{*} | | | | | 0.0085 |
| ***A-1*** [Gew.-%]^{*} | | | 0.032 | 0.024 | 0.024 |
| Wasserbedarf [%] | 25.2 | 26.2 | 24.4 | 26 | 25.1 |
| Δ_{ref} | | 4% | -3% | 3% | 0% |
| Ausbreitmass [cm] | 19.3 | 18 | 20 | 19.5 | 19.8 |
| Δ_{ref} | | -7% | 4% | 1 % | 3% |
| | | | | | |
| Luftporen-Gehalt [%] | 2.8 | 2.9 | 2.7 | 2.8 | 2.8 |
| Δ_{ref} | | 4% | -4% | 0% | 0% |
| | | | | | |
| Druckfestigkeiten [N/mm²] | | | | | |
| nach 2d | 24.8 | 25.1 | 22.1 | 24.5 | 25 |
| Δ_{ref} | | 1% | -11% | -1% | 1% |
| nach 28d | 53.2 | 53.1 | 53.7 | 52.6 | 54.2 |
| Δ_{ref} | | 0% | 1% | -1% | 2% |
| | | | | | |

| | | | | | |
|---|---|---|---|---|---|
| ^{*}bezogen auf Klinker. | | | | | |

### Polymere A/Alkanolamin/Alkylenglykol-Mischungen als Mahlhilfsmittel (ZAMH)

Klinker: ***K-1*** mit Sulfatträger

**Tabelle 10 Polymer A/Alkanolamin/Alkylenglykol-Mischungen als Mahlhilfsmittel**

| | ***Ref.1-6*** | ***11-1*** | ***11-2*** | ***11-3*** | ***11-4*** | ***11-5*** | ***11-6*** |
|---|---|---|---|---|---|---|---|
| Mahlhilfsmittel | - | ***A-11*** | ***A-11***/ ***DEG*** | ***A-11***/ ***TIPA*** | ***A-11***/ ***DEG***/***TIPA*** | ***A-11*/ *TEA*** | ***A-11***/ ***DEG***/***TEA*** |
| ***A-11*** [Gew.-%]^{*} | | 0.08 | 0.04 | 0.04 | 0.04 | 0.04 | 0.04 |
| ***DEG*** [Gew.-%]^{*} | | | 0.04 | | 0.02 | | 0.02 |
| ***TIPA*** [Gew.-%]^{*} | | | | 0.04 | 0.02 | | |
| ***TEA*** [Gew.-%]^{*} | | | | | | 0.04 | 0.02 |
| Wasserbedarf [%] | 26.7 | 26.4 | 27.1 | 28.2 | 27.9 | 28.2 | 27.8 |
| Δ_{ref} | | -1% | 1% | 6% | 4% | 6% | 4% |
| Ausbreitmass [cm] | 16.8 | 19.3 | 18.7 | 18.0 | 18.4 | 18.4 | 18.9 |
| Δ_{ref} | | 15% | 11 % | 7% | 10% | 10% | 13% |
| Luftporengehalt[%] | 3.1 | 3.2 | 3.3 | 3.4 | 3.2 | 3.1 | 3.1 |
| Δ_{ref} | | 3% | 6% | 10% | 3% | 0% | 0% |
| Siebrückstand₄₀₀₀ >32 µm [%] | 30.80 | 24.90 | 24.62 | 20.04 | 23.25 | 19.74 | 17.07 |
| Δ_{ref} | | -19% | -20% | -35% | -25% | -36% | -45% |
| Druckfestigkeiten [N/mm²] | | | | | | | |
| nach 24 h | 11.0 | 9.6 | 9.8 | 11.0 | 11.6 | 13.4 | 13.5 |
| Δ_{ref} | | -13% | -11% | 0% | 5% | 22% | 23% |
| nach 2d | 19.8 | 18.9 | 18.7 | 21.1 | 21.9 | 21.9 | 23.1 |
| Δ_{ref} | | -5% | -6% | 7% | 11 % | 11 % | 17% |
| nach 7d | 28.4 | 28.3 | 30.3 | 31.8 | 33.4 | 32.4 | 32.5 |
| Δ_{ref} | | 0% | 7% | 12% | 18% | 14% | 14% |
| nach 28 d | 42.5 | 41.7 | 43.3 | 43.9 | 45.5 | 46.2 | 47.6 |
| Δ_{ref} | | -2% | 2% | 3% | 7% | 9% | 12% |

| | | | | | | | |
|---|---|---|---|---|---|---|---|
| ^{*}bezogen auf Klinker | | | | | | | |

## Patentansprüche

**1.** Verwendung einer wässrigen Zusammensetzung enthaltend mindestens ein Polymer A der Formel (I) als Zementmahlhilfsmittel 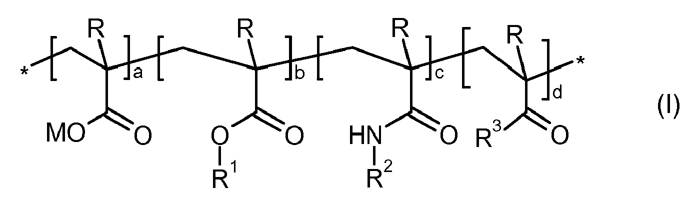 wobei
M = unabhängig voneinander H⁺, Alkalimetallion, Erdalkalimetallion, zwei- oder dreiwertiges Metallion, Ammoniumion oder organische Ammoniumgruppe darstellt,
R = jedes R unabhängig von den anderen Wasserstoff oder Methyl ist,
R¹ und R² = unabhängig voneinander C₁- bis C₂₀-Alkyl, Cycloalkyl, Alkylaryl oder -[AO]ₙ-R⁴ darstellen, wobei A = C₂- bis C₄-Alkylen, R⁴ = C₁- bis C₂₀ -Alkyl, Cyclohexyl oder Alkylaryl darstellt; und n = 2 - 250,
R³ = -NH₂, -NR⁵R⁶, -OR⁷NR⁸R⁹,
wobei R⁵ und R⁶ unabhängig voneinander
H oder eine C₁- bis C₂₀- Alkyl-, Cycloalkyl- oder Alkylaryl- oder Arylgruppe ist;
oder
eine Hydroxyalkylgruppe ist,
oder eine
Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) ist,
oder R⁵ und R⁶ zusammen einen Ring bilden,
von dem der Stickstoff ein Teil ist, um einen Morpholin- oder Imidazolinring aufbauen,
wobei R⁷ eine C₂-C₄- Alkylengruppe ist,
und R⁸ und R⁹ unabhängig voneinander eine C₁- bis C₂₀- Alkyl-, Cycloalkyl-, Alkylaryl-, Aryl- oder eine Hydroxyalkylgruppe ist,
und wobei a, b, c und d Molverhältnisse darstellen und
a/b/c/d = (0.1 - 0.9) / (0.1 - 0.9) / (0 - 0.8) / (0 - 0.3),
und a + b + c + d = 1 ist.

**2.** Verwendung einer wässrigen Zusammensetzung gemäss Anspruch 1, **dadurch gekennzeichnet, dass** n = 8 - 200, besonders bevorzugt n = 11 - 150 ist.

**3.** Verwendung einer wässrigen Zusammensetzung gemäss Anspruch 1 oder 2, **dadurch gekennzeichnet, dass**
| | |
|---|---|
| a/b/c/d = | (0.1 - 0.9) / (0.1 - 0.9) / (0 - 0.5) / (0 - 0.1), bevorzugt |
| a/b/c/d = | (0.1 - 0.9) / (0.1 - 0.9) / (0 - 0.3) / (0 - 0.06) ist. |

**4.** Verwendung einer wässrigen Zusammensetzung gemäss Anspruch 3, **dadurch gekennzeichnet, dass** c+d > 0 ist.

**5.** Verwendung einer wässrigen Zusammensetzung gemäss einem der vorhergehenden Ansprüche, **dadurch gekennzeichnet, dass** der Anteil des Polymeren **A** der Formel (I) 10 bis 90 Gew.-%, insbesondere 25 bis 50 Gew.-%, bezogen auf das Gewicht der wässrigen Zusammensetzung beträgt.

**6.** Verwendung einer wässrigen Zusammensetzung gemäss einem der vorhergehenden Ansprüche, **dadurch gekennzeichnet, dass** die Zusammensetzung eine Dispersion ist.

**7.** Verwendung einer wässrigen Zusammensetzung gemäss einem der Ansprüche 1 bis 5, **dadurch gekennzeichnet, dass** die Zusammensetzung eine Lösung ist.

**8.** Verwendung einer wässrigen Zusammensetzung gemäss einem der einem der vorhergehenden Ansprüche, **dadurch gekennzeichnet, dass** die wässrige Zusammensetzung weitere Mahlhilfsmittel enthält oder dass die wässrige Zusammensetzung zusammen mit weiteren Mahlhilfsmittel kombiniert wird.

**9.** Verwendung einer wässrigen Zusammensetzung gemäss Anspruch 8, **dadurch gekennzeichnet, dass** das weitere Mahlhilfsmittel ausgewählt ist aus der Gruppe umfassend Glykole, organische Amine und Ammoniumsalze von organische Amine mit Carbonsäuren

**10.** Verwendung einer wässrigen Zusammensetzung gemäss Anspruch 9, **dadurch gekennzeichnet, dass** das organische Amin ein Trialkanolamin, insbesondere Triisopropanolamin oder Triethanolamin, ist.

**11.** Verwendung einer wässrigen Zusammensetzung gemäss einem der einem der vorhergehenden Ansprüche, **dadurch gekennzeichnet, dass** die wässrige Zusammensetzung dem Klinker zudosiert wird, dass das Polymer **A** der Formel (I) zu 0.001 - 1.5 Gew.-%, insbesondere zwischen 0.005 und 0.2 Gew.-%, bevorzugt zwischen 0.005 und 0.1 Gew.-%, bezogen auf den zu mahlenden Klinker beträgt.

**12.** Verfahren zur Herstellung von Zement, **dadurch gekennzeichnet, dass** dem Klinker vor dem Mahlen eine wässrige Zusammensetzung umfassend mindestens ein Polymer **A** der Formel (I) zugegeben wird und anschliessend zum Zement gemahlen wird 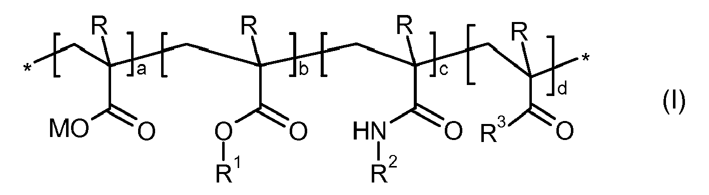 wobei
M = unabhängig voneinander H⁺, Alkalimetallion, Erdalkalimetallion, zwei- oder dreiwertiges Metallion, Ammoniumion oder organische Ammoniumgruppe darstellt,
R = jedes R unabhängig von den anderen Wasserstoff oder Methyl ist,
R¹ und R² = unabhängig voneinander C₁- bis C₂₀-Alkyl, Cycloalkyl, Alkylaryl oder -[AO]ₙ-R⁴ darstellen, wobei A = C₂- bis C₄-Alkylen, R⁴ = C₁- bis C₂₀ -Alkyl, Cyclohexyl oder Alkylaryl darstellt; und n = 2 - 250,
R³ = -NH₂, -NR⁵R⁶, -OR⁷NR⁸R⁹,
wobei R⁵ und R⁶ unabhängig voneinander eine C₁- bis C₂₀- Alkyl-, Cycloalkyl- oder Alkylaryl- oder Arylgruppe ist;
oder
eine Hydroxyalkylgruppe ist,
oder eine
Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) ist,
oder R⁵ und R⁶ zusammen einen Ring bilden,
von dem der Stickstoff ein Teil ist, um einen Morpholin- oder Imidazolinring aufbauen,
wobei R⁷ eine C₂-C₄- Alkylengruppe ist,
und R⁸ und R⁹ unabhängig voneinander eine C₁- bis C₂₀- Alkyl-, Cycloalkyl-, Alkylaryl-, Aryl- oder eine Hydroxyalkylgruppe ist,
und wobei a, b, c und d Molverhältnisse darstellen und
a/b/c/d = (0.1 - 0.9) / (0.1 - 0.9) / (0 - 0.8) / (0 - 0.3),
und a + b + c + d = 1 1 ist.

**1.** Verwendung einer wässrigen Zusammensetzung enthaltend mindestens ein Polymer A der Formel (I) als Zementmahlhilfsmittel 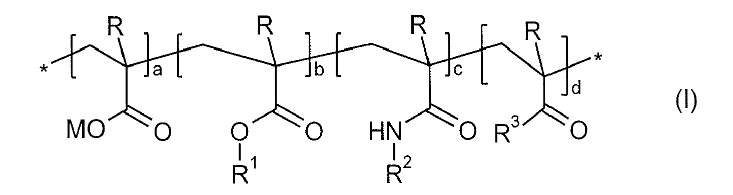 wobei
M = unabhängig voneinander H⁺, Alkalimetallion, Erd alkalimetallion, zwei- oder dreiwertiges Metallion, Ammoniumion oder organische Ammoniumgruppe darstellt,
R = jedes R unabhängig von den anderen Wasserstoff oder Methyl ist,
R¹ und R² = unabhängig voneinander C₁- bis C₂₀-Alkyl, Cycloalkyl, Alkylaryl
oder -[AO]ₙ-R⁴ darstellen,
wobei A = C₂- bis C₄-Alkylen, R⁴ = C₁- bis C₂₀ -Alkyl, Cyclohexyl
oder Alkylaryl darstellt;
und n = 2 - 250,
R³ = -NR⁵R⁶,wobei R⁵ und R⁶ unabhängig voneinander H oder eine Hydroxyalkylgruppe ist, wobei R³ nicht -NH₂ ist,
und wobei a, b, c und d Molverhältnisse darstellen und
a/b/c/d = (0.1 - 0.9) / (0.1 - 0.9) / (0 - 0.8) / (0 - 0.3),
a + b + c + d = 1 und c+d > 0 ist.

**2.** Verwendung einer wässrigen Zusammensetzung gemäss Anspruch 1, **dadurch gekennzeichnet, dass** n = 8 - 200, besonders bevorzugt n = 11 - 150 ist.

**3.** Verwendung einer wässrigen Zusammensetzung gemäss Anspruch 1 oder 2, **dadurch gekennzeichnet, dass**
| | |
|---|---|
| a/b/c/d = | (0.1 - 0.9) / (0.1 - 0.9) / (0 - 0.5) / (0 - 0.1), bevorzugt |
| a/b/c/d = | (0.1 - 0.9) / (0.1 - 0.9) / (0 - 0.3) / (0 - 0.06) ist. |

**4.** Verwendung einer wässrigen Zusammensetzung gemäss einem der vorhergehenden Ansprüche, **dadurch gekennzeichnet, dass** der Rest R³ -NH-CH₂-CH₂-OH ist.

**5.** Verwendung einer wässrigen Zusammensetzung gemäss einem der Ansprüche 1 - 3, **dadurch gekennzeichnet, dass** R⁵ und R⁶ unabhängig voneinander H oder eine Hydroxyalkylgruppe ist, wobei R³ nicht -NH₂ ist, und wobei es sich bei der Hydroxyalkylgruppe um HO-CH(CH₃)-CH₂- handelt.

**6.** Verwendung einer wässrigen Zusammensetzung gemäss einem der vorhergehenden Ansprüche, **dadurch gekennzeichnet, dass** der Anteil des Polymeren **A** der Formel (I) 10 bis 90 Gew.-%, insbesondere 25 bis 50 Gew.-%, bezogen auf das Gewicht der wässrigen Zusammensetzung beträgt.

**7.** Verwendung einer wässrigen Zusammensetzung gemäss einem der vorhergehenden Ansprüche, **dadurch gekennzeichnet, dass** die Zusammensetzung eine Dispersion ist.

**8.** Verwendung einer wässrigen Zusammensetzung gemäss einem der Ansprüche 1 bis 6, **dadurch gekennzeichnet, dass** die Zusammensetzung eine Lösung ist.

**9.** Verwendung einer wässrigen Zusammensetzung gemäss einem der einem der vorhergehenden Ansprüche, **dadurch gekennzeichnet, dass** die wässrige Zusammensetzung weitere Mahlhilfsmittel enthält oder dass die wässrige Zusammensetzung zusammen mit weiteren Mahlhilfsmittel kombiniert wird.

**10.** Verwendung einer wässrigen Zusammensetzung gemäss Anspruch 9, **dadurch gekennzeichnet, dass** das weitere Mahlhilfsmittel ausgewählt ist aus der Gruppe umfassend Glykole, organische Amine und Ammoniumsalze von organische Amine mit Carbonsäuren

**11.** Verwendung einer wässrigen Zusammensetzung gemäss Anspruch 10, **dadurch gekennzeichnet, dass** das organische Amin ein Trialkanolamin, insbesondere Trüsopropanolamin oder Triethanolamin, ist.

**12.** Verwendung einer wässrigen Zusammensetzung gemäss einem der einem der vorhergehenden Ansprüche, **dadurch gekennzeichnet, dass** die wässrige Zusammensetzung dem Klinker zudosiert wird, dass das Polymer **A** der Formel (I) zu 0.001 - 1.5 Gew.-%, insbesondere zwischen 0.005 und 0.2 Gew.-%, bevorzugt zwischen 0.005 und 0.1 Gew.-%, bezogen auf den zu mahlenden Klinker beträgt.

**13.** Verfahren zur Herstellung von Zement, **dadurch gekennzeichnet, dass** dem Klinker vor dem Mahlen eine wässrige Zusammensetzung umfassend mindestens ein Polymer **A** der Formel (I) zugegeben wird und anschliessend zum Zement gemahlen wird 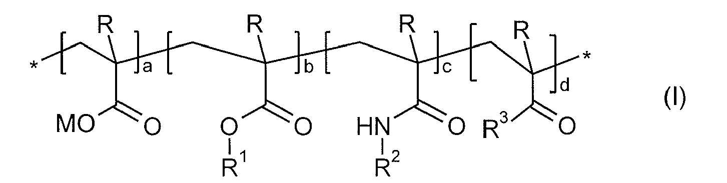 wobei
M = unabhängig voneinander H⁺, Alkalimetallion, Erdalkalimetallion, zwei- oder dreiwertiges Metallion, Ammoniumion oder organische Ammoniumgruppe darstellt,
R = jedes R unabhängig von den anderen Wasserstoff oder Methyl ist,
R¹ und R² = unabhängig voneinander C₁- bis C₂₀-Alkyl, Cycloalkyl, Alkylaryl
oder -[AO]ₙ-R⁴ darstellen,
wobei A = C₂- bis C₄-Alkylen, R⁴ = C₁- bis C₂₀ -Alkyl, Cyclohexyl
oder Alkylaryl darstellt;
und n = 2 - 250,
R³ = -NR⁵R⁶,
wobei R⁵ und R⁶ unabhängig voneinander
H oder eine Hydroxyalkylgruppe ist, wobei R³ nicht -NH₂ ist,
und wobei a, b, c und d Molverhältnisse darstellen und
a/b/c/d = (0.1 - 0.9) / (0.1 - 0.9) / (0 - 0.8) / (0 - 0.3),
a + b + c + d = 1 und c + d > 0 ist.

**14.** Verfahren gemäss Anspruch 13, **dadurch gekennzeichnet, dass** der Rest R³ - NH-CH₂-CH₂-OH ist.

**15.** Verfahren gemäss Anspruch 13, **dadurch gekennzeichnet, dass** R⁵ und R⁶ unabhängig voneinander H oder eine Hydroxyalkylgruppe ist, wobei R³ nicht - NH₂ ist, und wobei es sich bei der Hydroxyalkylgruppe um HO-CH(CH₃)-CH₂- handelt.
